(19) Europäisches Patentamt
European Patent Office
Office européen des brevets

(11) **EP 3 859 613 A1**

(12) **EUROPEAN PATENT APPLICATION**

(43) Date of publication:
**04.08.2021 Bulletin 2021/31**

(51) Int Cl.:
**G06N 5/00** (2006.01)   **G06N 10/00** (2019.01)

(21) Application number: **21152902.9**

(22) Date of filing: **22.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2020 JP 2020009647**
**09.11.2020 JP 2020186526**

(71) Applicants:
• **DENSO CORPORATION**
**Aichi-pref., 448-8661 (JP)**
• **RIKEN**
**Wako-shi**
**Saitama 351-0198 (JP)**

(72) Inventors:
• **IRIE, Hirotaka**
**Kariya-city, Aichi-pref., 448-8661 (JP)**
• **LIANG, Haozhao**
**Wako-shi, Saitama, 351-0198 (JP)**
• **DOI, Takumi**
**Wako-shi, Saitama, 351-0198 (JP)**
• **GONGYO, Shinya**
**Wako-shi, Saitama, 351-0198 (JP)**
• **HATSUDA, Tetsuo**
**Wako-shi, Saitama, 351-0198 (JP)**

(74) Representative: **Winter, Brandl - Partnerschaft mbB**
**Alois-Steinecker-Straße 22**
**85354 Freising (DE)**

(54) **INFORMATION PROCESSING SYSTEM, COMBINATORIAL OPTIMIZATION METHOD, AND COMBINATORIAL OPTIMIZATION PROGRAM**

(57)    An information processing system is used for solving combinatorial optimization problems for an objective function of a plurality of variables. The information processing system includes: two optimization systems that are a first optimization system and a second optimization system; and an extraction system. The first optimization system performs a first optimization process that allows, as continuous variables, the variables to continuously change in-between discrete values, and operates optimization and outputs evaluation which satisfies some restrictive conditions, using the continuous variables. The extraction system performs an extraction process that extracts variables, based on the continuous values of the first optimization system, and extracts, as ambivalent variables, the variables which cannot be decided to which discrete values should be taken. The second optimization system performs a second optimization process that solves the combinatorial optimization problem, based on the variables that are the ambivalent variables extracted in the extraction process.

FIG.1

**Description**

BACKGROUND

Technical Field

The present disclosure relates to an information processing system, a combinatorial optimization method, and a combinatorial optimization program.

Related Art

In recent years, various processing methods for solving combinatorial optimization problems have been proposed. In addition, a quantum annealing machine from D-Wave Systems, Inc. (registered trademark), the Digital Annealer (registered trademark) from Fujitsu, Ltd., a complementary metal-oxide semiconductor (CMOS) annealing machine from Hitachi, Ltd., and the like that are hardware (referred to, hereafter, as "dedicated machines") for solving combinatorial optimization problems using an objective function (energy function) that includes a plurality of variables have been developed. For example, these dedicated machines are capable of solving combinatorial optimization problems at a higher speed than typical computers through use of an objective function that is defined by discrete binary values such as spin variables.

As disclosed in JP-A-2019-046038, for example, these dedicated machines acquire highly accurate solutions in a short amount of time by converting the objective function of an optimization problem to an Ising-model objective function and processing the converted objective function using Ising-type hardware.

In cases in which an optimization problem is solved using discrete binary values (spin variables), as in the Ising model disclosed in JP-A-2019-046038, depending on the variables that comprise the objective function, while some variables can be easily fixed to either of the discrete binary values, other variables may not be easily fixed. To fix variables that cannot be easily fixed, calculation time is required.

Here, in solving optimization problems, the optimization problem is expected to be solved more quickly through use of a quantum computer than a classical computer. However, the quantum computer has limitations in terms of number of quantum bits and number of couplings. Resources are limited for fixing all of the variables that configure the objective function.

It is thus desired to solve this issue by providing an information processing system, a combinatorial optimization method, and a combinatorial optimization program.

SUMMARY

The present disclosure employs the technical means below to solve the above-described issues. Reference numbers within parentheses in the claims are examples indicating corresponding relationships with specific means according to the embodiments described hereafter and do not limit the technical scope of the present disclosure.

One of exemplary embodiments of the present disclosure provides an information processing system for solving combinatorial optimization problems for an objective function of a plurality of variables. The information processing system includes: two optimization systems that are a first optimization system and a second optimization system; and an extraction system. The first optimization system performs a first optimization process that allows, as continuous variables, the variables to continuously change in-between discrete values, and operates optimization and outputs evaluation which satisfies some restrictive conditions, using the continuous variables. The extraction system performs an extraction process that extracts variables, based on the continuous values of the first optimization system, and extracts, as ambivalent variables, the variables which cannot be decided to which discrete values should be taken. The second optimization system performs a second optimization process that solves the combinatorial optimization problem, based on the variables that are the ambivalent variables extracted in the extraction process.

By this configuration, the resource of computation can be efficiently optimized, and it becomes possible to solve large-scale combinatorial optimization problems in a reasonable computational time.

BRIEF DESCRIPTION OF THE DRAWINGS

In the accompanying drawings:

Fig. 1 is a schematic block diagram illustrating the configuration of an optimization processing system according to a first embodiment;
Fig. 2 is a schematic graph illustrating a relationship between potential energy of an objective function and an optimum solution according to the first embodiment;

Fig. 3 is a schematic graph illustrating a relationship between quantum annealing and classical quantum annealing according to the first embodiment;

Fig. 4 is a graph illustrating changes over time in scheduling functions A(t) and B(t) according to the first embodiment;

Fig. 5 is a graph illustrating changes over time in scheduling functions $\alpha(t)$ and $\beta(t)$ according to the first embodiment;

Figs. 6A and 6B are graphs for explaining extraction of ambivalent variables and fixed variables according to the first embodiment;

Fig. 7 is a flowchart illustrating a processing flow of a combinatorial optimization program according to the first embodiment;

Figs. 8A to 8C are schematic diagrams illustrating a solution to a traveling salesman problem using optimization according to the first embodiment; and

Fig. 9 is a graph illustrating effects according to the first embodiment and a second embodiment.

DESCRIPTION OF THE EMBODIMENTS

Embodiments of the present disclosure will hereinafter be described with reference to the accompanying drawings. Here, the embodiments described below are examples for carrying out the present disclosure. The present disclosure is not limited to specific configurations described below. The specific configurations according to the embodiments may be applied as appropriate in the implementation of the present disclosure.

First Embodiment

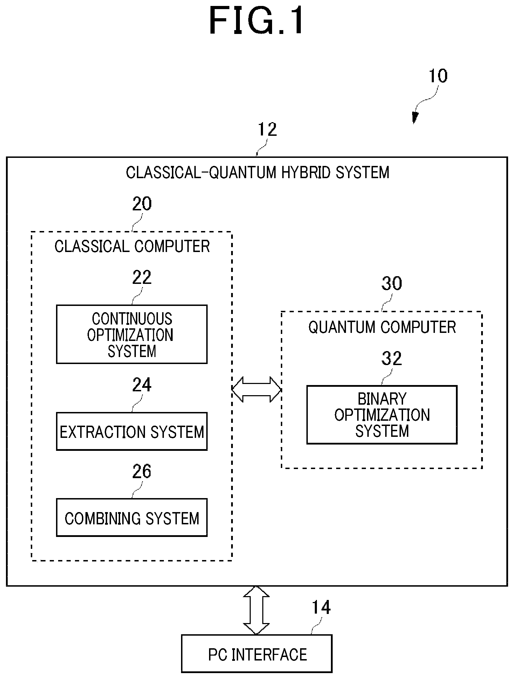

Fig. 1 is a schematic block diagram illustrating the configuration of an optimization processing system 10 of this embodiment. The optimization processing system 10 includes a classical-quantum hybrid system 12, which corresponds to an information processing system, and a personal computer (PC) interface 14.

The classical-quantum hybrid system 12 is intended to solve combinatorial optimization problems. The combinatorial optimization problems have binary variables for input of an objective function, and a combination of binary values of the binary variables is subjected to the optimization. The output of the objective function is a combination which satisfies some restriction conditions. The binary variables take, for example, $\pm 1$ values, and restriction conditions are, for example, such that the output of the objective function should be the optimum. These combinatorial optimization problems can be applied to logistics, scheduling, portfolio, and urban design, or the like, and are not limited to these examples.

One of the embodiments of the classical-quantum hybrid system 12 is to use a classical computer 20 and a quantum computer 30; and they are embodied by quantum annealing and classical quantum annealing.

The classical computer 20 is an information processing system which conducts computation with utilizing classical bits. The classical computer 20 may equip a central processing unit (CPU) and a general-purpose computing on graphics processing unit (GPGPU), and would be an Ising machine which solves Hamilton dynamical systems, such as a simulated bifurcation machine (SBM) manufactured by Toshiba Corporation. Such Hamilton dynamical systems may be also called Molecular Dynamics (MD). The classical computer 20 could be also a coherent Ising machine (CIM) manufactured by Nippon Telegraph and Telephone Corporation, which utilizes bifurcation phenomena of coherent light.

The quantum computer 30 consists of quantum mechanical bits and conducts computation with utilizing such quantum bits. An example of quantum computer would be a quantum processing unit (QPU) manufactured by D-wave systems, Inc.

The PC interface 14 is a classical computer. In this embodiment, the PC interface 14 also encodes the combinatorial optimization problems into an objective function (energy function or cost function) of Ising models, and sends that information to the classical-quantum hybrid system 12. The PC interface 14 also plays a role of displaying the optimization results and stores the result in a storage apparatus. The encoding of the objective function can also be performed by the classical computer 20.

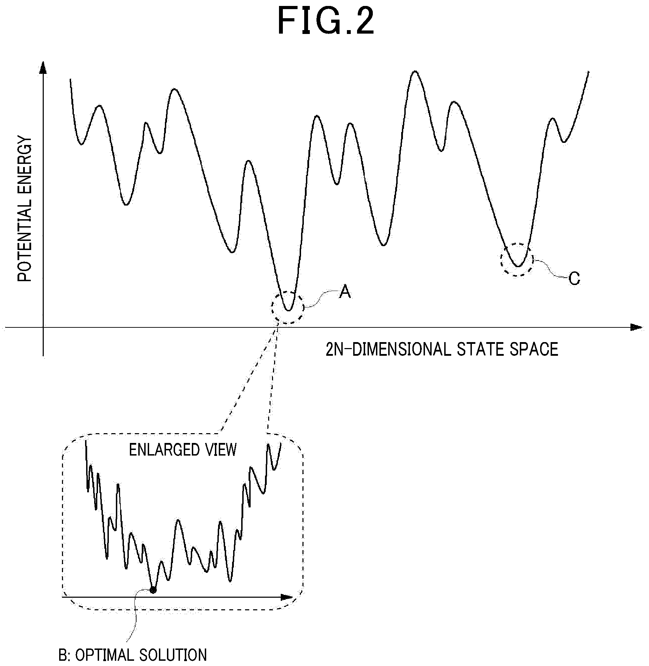

Quantum annealing evaluates the objective function to obtain optimum of the combinatorial optimization, that is, it evaluates the output of the objective function (it may be referred to as "potential energy") and the combination of input discrete variables that minimizes the objective function (or energy function). Fig. 2 is a schematic diagram illustrating a relationship between the potential energy of the objective function and combinations of a plurality of spin variables. A vertical axis indicates potential energy. A horizontal axis indicates a 2^N-dimensional state space in which an optimal solution is included.

A region A in Fig. 2 is an area that includes candidates for the optimal solution by which the potential energy becomes minimal. A point B that is indicated in an enlarged view of the region A expresses the optimal solution to be determined.

The current capacity of quantum computer is an issue; it possesses small number of qubits and connectivity.

For example, in a traveling salesman problem (hereinafter referred to "TSP") that is a common combinatorial optimization problem, the current quantum computer can only solve about eight cities. However, in terms of practical use, the quantum computer should ideally be able to solve a hundred cities or more. Moreover, the quantum computer will be required to solve a variety of combinatorial optimization problems that include even more variables in the future.

In addition, based on the spin variables that configure the objective function, some spin variables cannot easily be prescribed to be either of the discrete binary values. In the example in Fig. 2, although the region A that includes the candidates for the optimal solution can be identified, further identification of the spin variable that is the optimal solution indicated by point B is difficult. Therefore, all of the calculation processes for acquiring the optimal solution B is preferably performed by the quantum computer 30. However, as described above, the quantum computer 30 has only small numbers of quantum bits and quantum bit couplings, and does not have sufficient resources.

Therefore, as an embodiment of our hybrid systems, the classical-quantum hybrid system 12 which combines the classical computer 20 and the quantum computer 30 is introduced. The classical-quantum hybrid system solves the optimization problems, not only by the quantum computer 30, but also by using the classical computer 20 which is also responsible for solving a part of optimization problems. By this, classical and quantum resources to solve optimization problems can be effectively optimized.

Next, functions of the classical computer 20 and the quantum computer 30 will be described with reference to Fig. 1. As shown in Fig. 1, the classical computer includes a continuous optimization system 22 (that corresponds to a first optimization system), an extraction system 24, and a combining system 26. The quantum computer 30 includes a binary optimization system 32 (that corresponds to a second optimization system).

The continuous optimization system 22 performs a continuous optimization process (corresponding to a first optimization process) that evaluates the output (= potential energy) by using continuous variable which takes value in-between the discrete binary values. One of the embodiments of this part may be given by classical quantum annealing.

The extraction system 24 performs an extraction process that evaluates the continuous values from the continuous optimization process of the continuous optimization system 22 and extracts the fixed variables and unfixed variables. The unfixed variables mean that it is very hard to determine the proper values, only by the classical quantum annealing which is a classical computational method.

The fixed variables mean that it is not very hard to determine their proper values by classical computational method.

The binary optimization system 32 performs a binary optimization process (corresponding to a second optimization process) that solves a combinatorial optimization problem of the unfixed discrete variables and the objective function, which is obtain by substituting the fixed variables in the original objective function, where the fixed variables and unfixed variables are obtained by the extraction system 24. In this embodiment, the binary optimization process of the binary optimization system 32 is conducted by quantum annealing.

The combining system 26 performs a combining process that combines the results of the continuous optimization process of the continuous optimization system 22 and the binary optimization process of the binary optimization system 32, and shows the optimization result to the PC interface 14.

By this construction, the classical-quantum hybrid system 12 first evaluates the continuous optimization system 22 (by using continuous values in-between the discrete binary values), and evaluates the optimization problem. By using the continuous variables (which is used to solve the optimization problem), "ambivalent variables (which are difficult variables to be fixed)" can be extracted.

Therefore, the continuous variables are used in order to identify the ambivalent variables. In the other words, the continuous optimization process of the continuous optimization system 22 fixes the values which are easy to fix by the classical computer 20. Note that, from Fig. 2, one can understand that the classical computer 20 can specify the region A which includes the candidate of optimum B, but it cannot evaluate the optimum shown in the region A.

On the other hand, the extracted ambivalent variables are solved by the binary optimization system 32 by treating ambivalent variables as discrete binary values. Since this sub problem can be considered as intrinsically difficult optimization problem, it should be evaluated by high speed and high precision computer, such as the quantum computer.

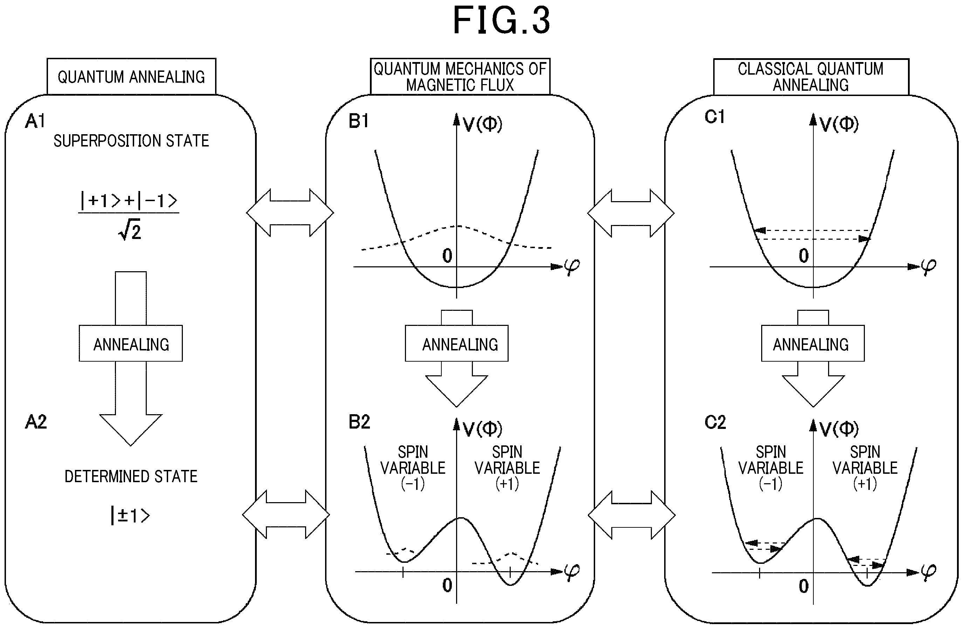

Next, description will be given with regard to the relation between quantum annealing (hereinafter referred to as "QA") performed by the quantum computer 30 and classical quantum annealing (hereinafter referred to as "CQA") performed by the classical computer 20. Fig. 3 shows the correspondence between QA and CQA.

First of all, in QA, there is a transverse field which produces a quantum superposition state of $\pm 1$ states. By gradually deforming the superposition state (known as annealing), as shown in A1 of Fig. 3, one can specify a $\pm 1$ configuration, as shown in A2 of Fig. 3.

In D-Wave machine (as an example of the quantum computer 30), such a situation is realized as a quantum mechanical system of flux fields, as shown in B2 of Fig. 3. Here, the superposition state (initial state) is described by quantum mechanics of lower-convex potential, as shown in B1 of Fig. 3. From this superposition situation, by gradually deforming (i.e. by annealing), a $\pm 1$ spin configuration (left/right configuration) is specified, as shown in B2 of Fig. 3.

On the other hand, classical quantum annealing is obtained by Bohr's correspondence principle. According to this principle, the initial superposition state (of transverse field) is understood as a horizontally oscillated motion, as shown in C1 of Fig. 3, moving from side to side. It can be understood as a classical motion which appears as a classical limit of quantum ground state (the limit of $\hbar = h/2\pi$ (reduced Planck constant) $\rightarrow$ 0). From such superposition state, by gradually deforming (by annealing), one can obtain a classical $\pm$ 1 spin configuration, as shown in C2 of Fig. 3. Therefore, classical quantum annealing is a classical imitation of quantum annealing processing.

The quantum Hamiltonian of quantum annealing is represented by $H_{QA}$ in Eq. (1), and classical quantum Hamiltonian of classical quantum annealing is represented by $H_{CQA}$ in Eq. (2). In these representation, scheduling functions (i.e., A(t) and B(t) in Eq. (1), and $\alpha$(t) and $\beta$(t) in Eq. (2)) are functions of parameters which vary from 0 to 1.

$$H_{QA} = A(t)\sum_{i=1}^{N}\sigma_i^x + B(t)\left[\sum_{i<j}J_{ij}\sigma_i^z\sigma_j^z + \sum_{i=1}^{N}h_i\sigma_i^z\right] \qquad (1)$$

A(t): scheduling function
B(t): scheduling function
$\sigma$: discrete variable
hi: value indicating force against i-th variable
$J_{ij}$: value indicating interaction between i-th variable and j-th variable
N: number of variables

$$H_{CQA} = \alpha(t)\sum_{i=1}^{N}\left(\frac{p_i^2}{2} + V(\varphi_i)\right) + \beta(t)\left[\sum_{i<j}J_{ij}\varphi_i\varphi_j + \sum_{i=1}^{N}h_i|\varphi_i|\varphi_i\right] \qquad (2)$$

$\alpha$(t): scheduling function
$\beta$(t): scheduling function
V($\varphi$): convex downward function
p: conjugate momentum
$h_i$: value indicating force against i-th variable
$J_{ij}$: value indicating interaction between i-the variable and j-th variable
$\varphi$: continuous variable
N: number of variables

In Eq. (2), the first term of Eq. (1) and that of Eq. (2) are related; the second term of Eq. (1) and that of Eq. (2) are also related. Note that Eq. (1) and Eq. (2) are examples of quantum and classical Hamiltonians, and other forms of Hamiltonian may be also allowed.

Next, description will be given with regard to quantum computation in quantum annealing (QA). In QA, each of the scheduling functions A(t) and B(t) changes its relative magnitude in its evolution.

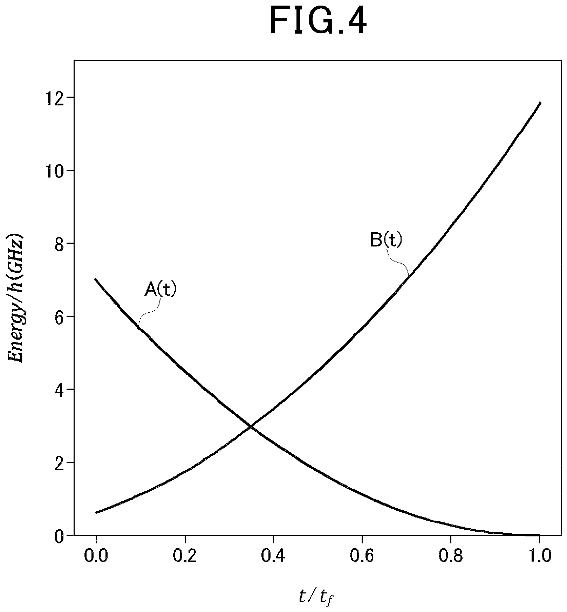

In the beginning of quantum annealing process, as shown in Fig. 4, A(t) is larger than B(t), which represents the system with a transverse field (and quantum superposition of $\pm$1). Here, since B(t) is small enough, it has a little effect to the total Hamiltonian $H_{QA}$.

In annealing procedure, the B(t) becomes gradually larger than A(t), and therefore the effects of Ising interaction terms in the quantum Hamiltonian $H_{QA}$ also becomes greater. As a result, by annealing process, the ground state (or a state close to the ground state) of the Ising interaction part, which is the optimum (or a solution close to the optimum) of the combinatorial optimization problem, becomes also prominent.

In this way, quantum annealing is an algorithm which starts with trivial ground state and continuously connects to the nontrivial ground state. By this, one can obtain optimum of the optimization problem.

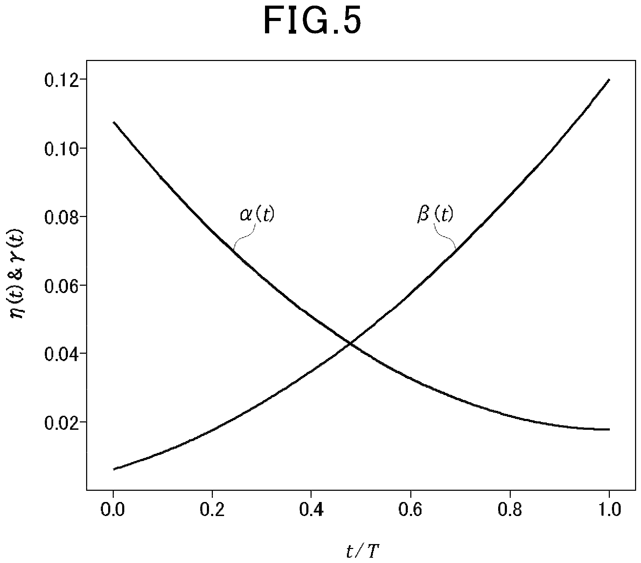

On the other hand, classical quantum annealing (CQA) is a classical correspondent of quantum annealing (QA). Therefore, CQA also evolves the scheduling functions $\alpha$(t) and $\beta$(t) in the same way as QA (as shown in Fig. 5).

$H_{CQA}$ has larger $\alpha$(t) in the beginning, and therefore, it shows particles of trivial free oscillations. This free oscillation can be identified with the quantum ground state, by identifying $\alpha$(t) and hbar (i.e., h) as follows:

$$\alpha(t) = \frac{1}{\hbar} \dots (3)$$

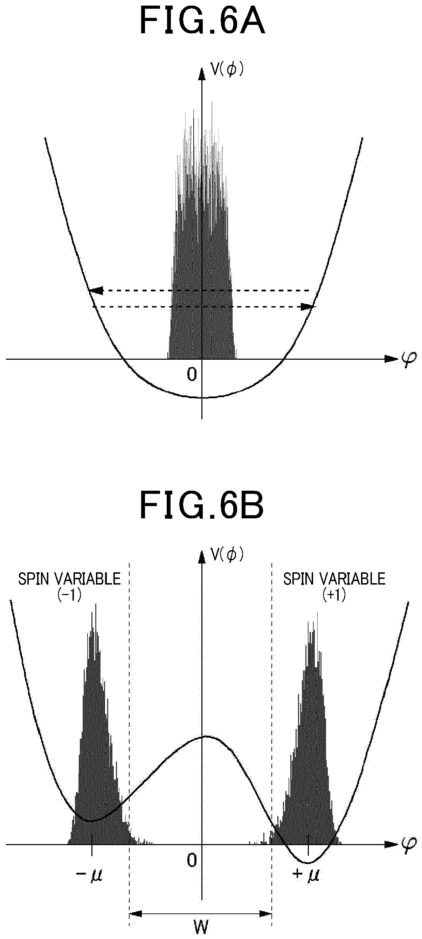

Here, Fig. 6 shows localization (oscillation) of continuous variable $\varphi$. In Fig. 6A, $\alpha(t)$ is larger than $\beta(t)$, and Fig. 6A shows a histogram of continuous variable $\varphi$ and its localization status. As can be seen in Fig. 6A, in the initial state of CQA, $\varphi$ does not localize around left/right configurations, and is just oscillating around the origin.

Then, by continuously deforming (or by classical annealing procedure), $\beta(t)$ becomes larger than $\alpha(t)$, as shown in Fig. 6B, each N particles (continuous variables $\varphi$) localizes around $\pm\mu$ and gives the solution represented by discrete values. Therefore, by tuning the flux field to $\pm\mu$, the final classical quantum Hamiltonian $H_{CQA}$ gives a solution of combinatorial optimization problem. In this way, by the principle of quantum annealing, CQA connects the initial ground state to the final ground state, and finally produces the optimum of combinatorial optimization.

In this way, classical quantum annealing is a computational way which imitate the quantum annealing, but it loses its "quantum" nature of computation (such as tunneling effects). In this sense, CQA is different from QA. Even though it is empirically observed that CQA itself achieves a good performance, the precision of the solution (obtained in CQA) can be further improved, by optimization operation of this embodiment of the classical-quantum hybrid system 12: the ambivalent variables are extracted in the classical computer 20, and such ambivalent variables are complementarily solved by quantum annealing of the quantum computer 30.

Next, description will be given with regard to how to extract the ambivalent variables and fix the other variables.

In this embodiment, the extraction process of the extraction system 24 is conducted by looking at the continuous variable $\varphi$ in CQA, and by dividing it into an inner region including a center (for example, $\varphi = 0$) and its outer region. The variables inside the inner region should be extracted as the ambivalent variables.

Fig. 6B shows "W", which represent these regions (said as bifurcation width), inside W, the variables $\varphi$ are understood as ambivalent variables. On the other hand, the variables $\varphi$ of outside of W are the spin variables which can be easily fixed. Therefore, they are fixed according to the value of $\varphi$.

Therefore, W represents how large the continuous variables can split into the binary values. The continuous variables inside the W are the variables which are still wandering where they will go. On the other hand, the variables outside W are the variables which almost finish wandering which place to go. Therefore, one can fix the value easily. In this embodiment, in this way, the discrete variables are translated into continuous variables, and evaluated by classical quantum annealing. After that, by using the extraction process of the extraction system 24, one can easily identify the ambivalent variables.

In this embodiment, if $\varphi$ is around $-\mu$, then it takes -1; if $\varphi$ is around $+\mu$, then it takes +1. The value of W is a priori given value, and if W is larger, then the number of ambivalent variables will increase; if W is small, then the number will decrease. In Fig. 6B, from the histogram, one can see that most of the variables are outside of W. This means that most of the variables are easily fixed classically, and a small number of variables are truly ambivalent variables.

Therefore, in this embodiment of the classical-quantum hybrid system 12, the relatively small amount of variables are extracted, and sent to the quantum computer 30. By this embodiment of the optimization processing system 10, one can efficiently use the limited resource of the quantum computer 30.

In this embodiment, W is considered to be associated with the central value of $\varphi$ as $\varphi=0$. However, one can also set the central value as $-\mu$ (as the first region), and the second central value as $+\mu$ (as the second region). Then, the ambivalent variables should be outside of these two regions. Or, even one can choose the n-th closest continuous variable $\varphi$ to the origin $\varphi=0$, and set $W = |\varphi|$, instead of using a priory given value of W.

Here, description will be given with regard to the concept of optimization operation in this embodiment of the classical-quantum hybrid system 12, with reference to Fig. 2.

As explained above, CQA conducts the optimization process by replacing the discrete variables by continuous variables $\varphi$. As a result, it can easily specify lower energy region in the huge landscape of optimization problems (Fig. 2A). However, it is quite difficult to specify the fine structure of the region A around the optimum B in Fig. 2. Therefore, quantum annealing of the quantum computer 30 is used to resolve the fine structure and obtain the optimum in the region A.

There is another method called sampling persistency, which tries to specify which $\pm 1$ values should be taken by sampling several solutions of combinatorial optimization, the method which is different from the above mentioned continuous-variable based classical-quantum hybrid method. In the sampling method, sampling should be taken from the region C as well as the region A (C and A are different valleys). Therefore, the sampling-persistency method cannot distinguish the region A from the region C with the same precision obtained by CQA. Thus, the continuous-variable method such as CQA can identify the region quickly and more accurately.

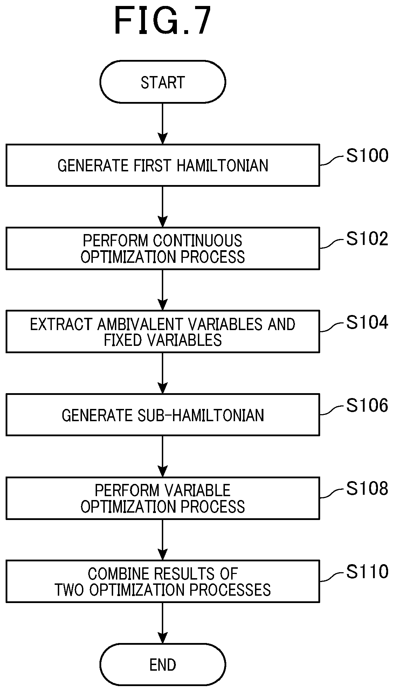

Fig. 7 shows flow-chart of optimization operation programs, which associated with the optimization processing system 10 of this embodiment. Both the classical computer 20 and the quantum computer 30 executes the associated programs which are saved in some sorts of memory. By executing these programs, associated methods are conducted.

First of all, in step S100, the PC interface 14 conducts the translation of combinatorial optimization problem to classical quantum Hamiltonian $H_{CQA}$, and send it to the classical-quantum hybrid system 12. This $H_{CQA}$ is the first Hamiltonian for optimization of spin variables, conducted by the continuous variables $\varphi$.

In the next step S102, the continuous optimization process is conducted by the continuous optimization system 22 of the classical computer 20 That is, optimization of the continuous variables (by the first Hamiltonian) is performed (= classical quantum annealing).

In the next step S104, based on the result of step S102, the extraction process is performed by the extraction system 24. That is, the the extraction process extracts the ambivalent variables and fixed (or frozen) variables. The value of the fixed variables should be chosen by the values of the continuous variables. The spin (binary) values of the fixed variables are stored as a part of optimization solution of this combinatorial optimization.

In the next step S106, quantum Hamiltonian for the ambivalent variables is constructed (below, it is called sub-Hamiltonian). It is conducted by the PC interface 14 or the classical computer 20.

In the next step S108, the binary optimization system 32 inside the quantum computer 30 executes the binary optimization process. That is, the binary optimization process executes the optimization (quantum annealing) of minimizing sub-Hamiltonian of the ambivalent variables.

In the step S110, fixed spin variables that are results (first results) from the continuous optimization process of the continuous optimization system 22 and evaluated spin variables that are results (second results) from the binary optimization process of the binary optimization system 32 are combined in the combining process of the combining system 26 to produce the optimum solution of the optimization problem. The result of these processes is outputted by the PC interface 14, and this optimization processing program terminates.

Here, according to the present embodiment, the continuous variable $\varphi$ may continuously change between binary variables of 1 and 0. In this case, for example, continuous variables $\varphi$ that are close to 1 and have a difference less than a difference R are variables s that are fixed to 1, and variables s that are not included therein are the ambivalent variables. Moreover, this is not limited thereto. The continuous variables $\varphi$ that are close to 0 and have a difference less than a difference R are variables s that are fixed to 0, and variables s that are not included therein are the ambivalent variables. Note that the continuous variable continuously changing between 1 and 0 is an example of binary values. The continuous variable may continuously change between a predetermined value x and a predetermined value y.

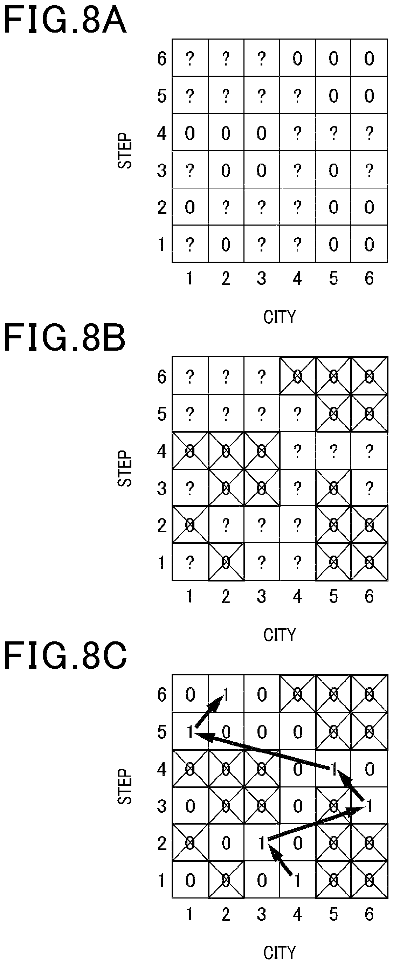

As an embodiment in which the continuous variables $\varphi$ are binary variables of 1 or 0, the traveling salesman problem will be described as an example, with reference to Figs. 8A to 8C. Figs. 8A to 8C are schematic diagrams illustrating an Ising model for calculating an optimal sequence when an N number (six according to the present embodiment) cities are toured. A horizontal direction indicates the cities and a vertical direction indicates a touring order of each city. As shown in Figs. 8A to 8C, N × N quantum bits are required to solve the traveling salesman problem. The quantum bit corresponds to a single square in Figs. 8A to 8C.

According to the present embodiment, the variables s that respectively correspond to the N × N quantum bits are the continuous variables $\varphi$ that virtually continuously change. In addition, as an example, the continuous variable $\varphi$ continuously changes between 0 and 1. The continuous variables $\varphi$ that are close to a predetermined value 0 and have a difference less than the difference R are the variables s that can be fixed, and the variables s that are not included therein are the ambivalent variables.

In this manner, according to the present embodiment, the continuous variable $\varphi$ selects the binary variable of 1 or 0. 1 indicates that the salesman pays a visit and 0 indicates that the salesman does not pay a visit. That is, a constraint in which each city is 1 at any one of step 1 to step 6, and 0 at the other steps is applied. As a result, the touring order of the cities is indicated by the step at which each city becomes 1. In addition, because the salesman cannot simultaneously visit a plurality of cities, a constraint is applied such that a same step cannot be 1 for a plurality of cities.

In this specific application, the continuous variables $\varphi$ of the continuous optimization system 22 in the classical computer 20 continuously change in-between 0 and 1. If the continuous variables $\varphi$ are close to 0, then the corresponding discrete variable s should be fixed to be 0 (fixed variables), otherwise the corresponding discrete variables s belong to ambivalent variables (Figs. 8A and 8B). The extraction process is conducted by the extraction system 24.

Then, the discrete binary optimization system 32 that is provided in the quantum computer 30 performs the optimization calculation and the variables s that are determined to be the ambivalent variables are each fixed to 0 or 1. Fig. 8C shows the results of the optimization calculation. Fig. 8C shows that touring the cities in order from city 4 to city 3 to city 6 to city 5 to city 1 to city 2 is optimal.

Second Embodiment

According to a present embodiment, superposition state involving three or more states, that is, a mode in which a variable is multi-valued will be described. Conceptually, a particle that is enclosed in a high-dimensional space (K-dimensional space) moves back and forth between a plurality (q) of nodes that is three or more. Optimization calculation with reference to the continuous variables $\varphi$ is performed to make the particle settle on one node. That is, the variable according to the present embodiment is a continuous variable that continuously changes among multiple values that are expressed by a plurality of nodes.

For example, in a quantum computer (quantum Potts annealer) that permits three superposition states ($|1\rangle$, $\omega\rangle$, $|\omega2\rangle$), classical quantum annealing can be performed by continuous variables $\varphi = (\varphi1, \varphi2)$ that describe particle movement that moves between three nodes {1, $\omega$, $\omega2$} in a two-dimensional space. Here, the quantum Potts annealer can be substituted by a quantum annealer that is based on the quantum Ising model.

Next, the present embodiment will be described so as to be applied to the traveling salesman problem, with reference to above-described Figs. 8A to 8C, using the quantum Potts annealer that permits six superposition states as an example. The six different states in which any of step 1 to step 6 of each city, indicated in the vertical direction in Figs. 8A to 8C, is 1 and the other steps are 0 correspond to the multiple values (six values in the example in Figs. 8A to 8C).

In contrast, as a result of six binary variables s = (s1, s2, s3, s4, s5, s6) (which take the six discrete values as described above) being considered continuous variables $\varphi = (\varphi1, \varphi2, \varphi3, \varphi4, \varphi5, \varphi6)$, a particle in a six-dimensional space is described. This process is conducted by the continuous optimization system 22.

Conceptually, as a result of this particle being fixed to any of the six values, taking into consideration the state in which the particle moves around the six values, described above, the traveling salesman problem can be solved through classical quantum annealing that corresponds to the quantum Potts annealer. As a result of this multi-valued configuration in particular, the constraint in which each city is 1 at any one of step 1 to step 6, and 0 at the other steps can be forcibly satisfied. The search for a solution can be more efficiently performed.

In addition, in relation to classical quantum annealing, described above, in which the particle moves around the six nodes in the six-dimensional space, the binary variable s is fixed to a node, among the plurality of nodes, of which the difference is less than the predetermined difference R. A variable of which the difference R in relation to any of the plurality of nodes is not within a predetermined value is extracted as an ambivalent variables. The extraction of ambivalent variables and fixed variables is conducted by the extraction system 24.

Here, in the example in Figs. 8A to 8C, six dimensions are given as an example. However, regardless of the number of nodes, the dimensions may be any dimensions from two dimensions to K dimensions. In addition, instead of numeric values that are multiple values, color-coding or classification may be used.

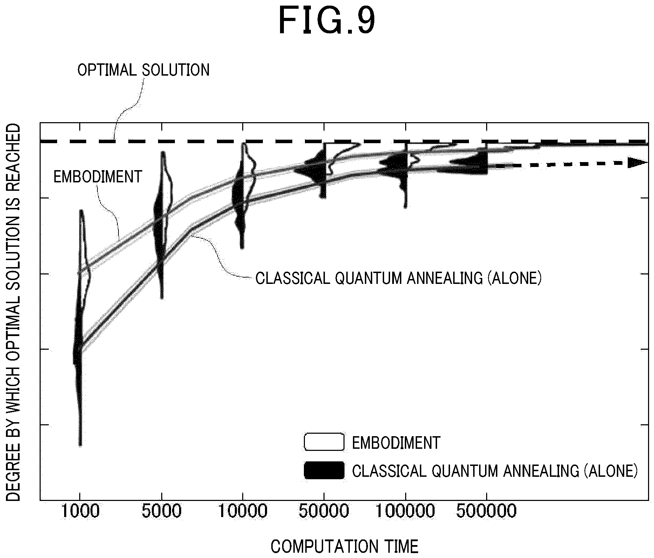

Here, Fig. 9 is a schematic diagram illustrating degrees by which an optimal solution is reached through the optimization calculation described according to the first embodiment and the second embodiment, and through classical quantum annealing alone.

In Fig. 9, a horizontal axis indicates computation time (log display) and a vertical axis indicates the degree by which an optimal solution is reached. As shown in Fig. 9, in classical quantum annealing, a solution that is close to the optimal solution can be outputted in a somewhat short amount of calculation time. However, to output a solution that is closer to the optimal solution, the computation time increases exponentially, and accuracy thereof is asymptotic.

Meanwhile, according to the embodiment in which the ambivalent variables are extracted and the quantum computer 30 calculates only the ambivalent variables, a more accurate solution that is closer to the optimal solution can be outputted in a shorter amount of computation time than that in classical quantum annealing.

Third Embodiment

According to a present embodiment, values based on a search history of the variables s that are discrete values are considered to be the continuous variables $\varphi$. For example, the variables s that change to either of -1 and +1 are sequentially updated to a differing value during the search for a solution.

Here, according to the present embodiment, the ambivalent variable is extracted based on results of a plurality of updates that are performed during the search process, that is, the search history. As a result, the ambivalent variable can be easily extracted.

According to the present embodiment, as an example, an average value of values at every update $T_n$ in the search history is the continuous variable $\varphi$ of the variable s. In addition, the variable s of which the average value is within a predetermined range (bifurcation width W) between -1 and +1 is the ambivalent variable.

Table 1 shows an example of the values at every update $T_n$ (n=0, ⋯, n) in the search history of the variables.

[Table 1]

| | $T_0$ | $T_1$ | $T_2$ | $T_3$ | $T_4$ | $T_5$ | $T_6$ | $T_7$ | $T_8$ | $T_9$ |
|---|---|---|---|---|---|---|---|---|---|---|
| s | +1 | -1 | -1 | +1 | -1 | -1 | +1 | +1 | -1 | -1 |

In the example in Table 1, the average value that is the continuous variable $\varphi$ is -1/5. In addition, for example, when the above-described predetermined range W is -9/10 < W < +9/10, because the continuous variable $\varphi$ is within

the predetermined range W, the variable s shown in Table 1 is extracted as the ambivalent variable. Here, as an example, the classical computer 20 performs the search for the variable s and the extraction system 24 extracts the ambivalent variable.

Here, according to the present embodiment, a mode in which the average value of the values at every update $T_n$ in the search history is the continuous variable $\varphi$ of the variable s is described. However, the continuous variable $\varphi$ is not limited to the average value. Other values may be used as long as the value is based on the values at every update $T_n$ in the search history.

The present disclosure is described above according to the above-described embodiments. However, the technical scope of the present disclosure is not limited by the scope described according to the above-described embodiments. Various changes and modifications can be made without departing from the spirit of the present disclosure. Embodiments in which these changes and modifications are applied are also included in the technical scope of the present disclosure.

For example, according to the above-described embodiments, the variables that configure the objective function are spin variables and the discrete binary values are $\pm 1$. However, the present disclosure is not limited thereto. For example, the discrete binary values that are inputted to the variables that configure the objective function may be a binary variable of 0 or 1, or other discrete binary values.

In addition, the variables that configure the objective function are not limited to the spin variables that are discrete binary values, and may be multiple discrete values, such as three, four, or more discrete values. That is, the extraction system 24 extracts, as the ambivalent variable, a variable that cannot be determined to be any of the multiple discrete values, among a plurality of variables, based on the continuous variables used in the continuous optimization system.

As an example, in the case that the variable is three discrete values of {-1, 0, 1}, the extraction system 24 specifies a certain domain, and if the continuous variable $\varphi$ is inside the domain, the variable $\varphi$ is determined to belong to ambivalent variables. For example, the certain domain is defined by a union of the first domain centered around $\varphi=-0.5$, and the second domain centered around $\varphi = +0.5$. In this way, the ambivalent variables and fixed variables (fixed to either of {-1, 0, 1}) are separated.

In addition, according to the above-described embodiments, the information processing system of the present disclosure is a system that is configured by the classical computer 20 and the quantum computer 30. However, the present disclosure is not limited thereto. The information processing system may be configured by two computers that have differing processing characteristics. For example, the continuous optimization process of the continuous optimization system 22, the extraction process of the extraction system 24, and the combining process of the combining system 26 are conducted by a computer that processes a relatively wide search space with rough accuracy; the binary optimization process of the binary optimization system 32 is conducted by a computer that processes a relatively narrow search space with high accuracy.

Furthermore, according to the above-described embodiment, the classical computer 20 and the PC interface 14 are described as differing information processing apparatuses. However, the processes performed by the classical computer 20 and the processes performed by the PC interface 14 may be performed by a same information processing apparatus (classical computer).

The present disclosure can be applicable to information processing systems, which are used to solve combinatorial optimization problem.

**Claims**

1. An information processing system (12) for solving combinatorial optimization problems for an objective function of a plurality of variables, the information processing system comprising:

   two optimization systems that are a first optimization system (22) and a second optimization system (32); and an extraction system (24), wherein:

   the first optimization system (22) performs a first optimization process that

   allows, as continuous variables, the variables to continuously change in-between discrete values, and operates optimization and outputs evaluation which satisfies some restrictive conditions, using the continuous variables;

   the extraction system (24) performs an extraction process that

extracts variables, based on the continuous values of the first optimization system (22), and extracts, as ambivalent variables, the variables which cannot be decided to which discrete values should be taken; and

the second optimization system (32) performs a second optimization process that solves the combinatorial optimization problem, based on the variables that are the ambivalent variables extracted in the extraction process.

2. The information processing system according to claim 1, wherein:

the extraction system uses the continuous values of the first optimization system, and separates the variables into two categories by using a certain domain which includes a mid-value among the plurality of discrete values; and
the continuous values are included in the domains are extracted as the ambivalent variables to be optimized by the second optimization process.

3. The information processing system according to claim 1 or 2, wherein:
the information processing system possesses a method which combines first and second results from the two optimization systems,

the first result being a result of fixing values in the first optimization process, and
the second result being a result of fixing values in the second optimization process.

4. The information processing system according to any one of claims 1 to 3, wherein:
the second optimization system solves combinatorial optimization problems of the discrete variables which are extracted by the previously mentioned extraction process, and is operated by quantum annealing scheme.

5. The information processing system according to claim 4, wherein:
the quantum annealing scheme is conducted based on Hamiltonian of equation (1) expressed by:

$$H_{QA} = A(t)\sum_{i=1}^{N}\sigma_i^x + B(t)\left[\sum_{i<j}J_{ij}\sigma_i^z\sigma_j^z + \sum_{i=1}^{N}h_i\sigma_i^z\right] \qquad (1)$$

A(t): scheduling function
B(t): scheduling function
σ: discrete variables
$h_i$: value indicating force against i-th variable
$J_{ij}$: value indicating interaction between i-th variable and j-th variable
N: number of variables.

6. The information processing system according to any one of claims 1 to 5, wherein:
the first optimization system is operated by classical quantum annealing scheme that is an optimization method which imitates quantum annealing optimization mechanism.

7. The information processing system according to claim 6, wherein:
the classical quantum annealing scheme is conducted based on Hamiltonian of equation (2) expressed by:

$$H_{CQA} = \alpha(t)\sum_{i=1}^{N}\left(\frac{p_i^2}{2} + V(\varphi_i)\right) + \beta(t)\left[\sum_{i<j}J_{ij}\varphi_i\varphi_j + \sum_{i=1}^{N}h_i|\varphi_i|\varphi_i\right] \qquad (2)$$

α(t): scheduling function
β(t): scheduling function
V(cp): convex downward function
p: conjugate momentum

$h_i$: value indicating force against i-th variable
$J_{ij}$: value indicating interaction between i-th variable and j-th variable
$\varphi$: continuous variables
N: number of variables.

8. The information processing system according to any one of claims 1 to 7, wherein:

the first optimization process and the extraction process are conducted by classical computation (20); and
the second optimization process is conducted by quantum computation (30).

9. The information processing system according to any one of claims 1 to 8, wherein:

each of the variables takes one of a plurality of discrete nodes;
the first optimization process allows the variables to continuously change in-between the plurality of discrete nodes; and
the extraction system extracts, as the ambivalent variables, the variables whose distance from each node is not less than a certain value.

10. The information processing system according to any one of claims 1 to 4, wherein:
the continuous variables are constructed by a searching history of updating discrete variables in solving the combinatorial optimization problem.

11. A combinatorial optimization method for solving combinatorial optimization problems for an objective function of a plurality of variables, the combinatorial optimization method comprising:

performing a first optimization process that

allows, as continuous variables, the variables to continuously change in-between discrete values, and
operates optimization and outputs evaluation which satisfies some restrictive conditions, using the continuous variables;

performing an extraction process that

extracts variables, based on the continuous values of the first optimization process, and
extracts, as ambivalent variables, the variables which cannot be decided to which discrete values should be taken; and

performing a second optimization process that
solves the combinatorial optimization problem, based on the variables that are the ambivalent variables extracted in the extraction process.

12. A combinatorial optimization program for causing a computer, which is provided in an information processing system for solving combinatorial optimization problems for an objective function of a plurality of variables, to implement:

performing a first optimization process that

allows, as continuous variables, the variables to continuously change in-between discrete values, and
operates optimization and outputs evaluation which satisfies some restrictive conditions, using the continuous variables;

performing an extraction process that

extracts variables, based on the continuous values of the first optimization process, and
extracts, as ambivalent variables, the variables which cannot be decided to which discrete values should be taken; and

performing a second optimization process that
solves the combinatorial optimization problem, based on the variables that are the ambivalent variables extracted in the extraction process.

# FIG.1

# FIG.2

FIG.3

# FIG.4

# FIG.5

FIG.6A

FIG.6B

# FIG.7

START

GENERATE FIRST HAMILTONIAN — S100

PERFORM CONTINUOUS
OPTIMIZATION PROCESS — S102

EXTRACT AMBIVALENT VARIABLES AND
FIXED VARIABLES — S104

GENERATE SUB-HAMILTONIAN — S106

PERFORM VARIABLE
OPTIMIZATION PROCESS — S108

COMBINE RESULTS OF
TWO OPTIMIZATION PROCESSES — S110

END

# FIG.8A

| STEP \ CITY | 1 | 2 | 3 | 4 | 5 | 6 |
|---|---|---|---|---|---|---|
| 6 | ? | ? | ? | 0 | 0 | 0 |
| 5 | ? | ? | ? | ? | 0 | 0 |
| 4 | 0 | 0 | 0 | ? | ? | ? |
| 3 | ? | 0 | 0 | ? | 0 | ? |
| 2 | 0 | ? | ? | ? | 0 | 0 |
| 1 | ? | 0 | ? | ? | 0 | 0 |

# FIG.8B

| STEP \ CITY | 1 | 2 | 3 | 4 | 5 | 6 |
|---|---|---|---|---|---|---|
| 6 | ? | ? | ? | ✗ | ✗ | ✗ |
| 5 | ? | ? | ? | ? | ✗ | ✗ |
| 4 | ✗ | ✗ | ✗ | ? | ? | ? |
| 3 | ? | ✗ | ✗ | ? | ✗ | ? |
| 2 | ✗ | ? | ? | ? | ✗ | ✗ |
| 1 | ? | ✗ | ? | ? | ✗ | ✗ |

# FIG.8C

| STEP \ CITY | 1 | 2 | 3 | 4 | 5 | 6 |
|---|---|---|---|---|---|---|
| 6 | 0 | 1 | 0 | ✗ | ✗ | ✗ |
| 5 | 1 | 0 | 0 | 0 | ✗ | ✗ |
| 4 | ✗ | ✗ | ✗ | 0 | 1 | 0 |
| 3 | 0 | ✗ | ✗ | 0 | ✗ | 1 |
| 2 | ✗ | 0 | 1 | 0 | ✗ | ✗ |
| 1 | 0 | ✗ | 0 | 1 | ✗ | ✗ |

# FIG.9

OPTIMAL SOLUTION

EMBODIMENT

CLASSICAL QUANTUM ANNEALING (ALONE)

DEGREE BY WHICH OPTIMAL SOLUTION IS REACHED

☐ EMBODIMENT

■ CLASSICAL QUANTUM ANNEALING (ALONE)

1000    5000    10000    50000    100000    500000

COMPUTATION TIME

Europäisches
Patentamt

European
Patent Office

Office européen
des brevets

# EUROPEAN SEARCH REPORT

**Application Number**

EP 21 15 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chancellor Nicholas: "Modernizing Quantum Annealing using Local Searches Modernizing Quantum Annealing using Local Searches", , 22 June 2017 (2017-06-22), pages 1-28, XP055813256, Retrieved from the Internet: URL:https://arxiv.org/pdf/1606.06833.pdf [retrieved on 2021-06-14] * the whole document * | 1-12 | INV. G06N5/00 G06N10/00 |
| A | KARIMI HAMED ET AL: "Boosting quantum annealer performance via sample persistence", ARXIV. ORG, KLUWER ACADEMIC, DORDRECHT, NL, vol. 16, no. 7, 16 May 2017 (2017-05-16), pages 1-24, XP036236587, ISSN: 1570-0755, DOI: 10.1007/S11128-017-1615-X [retrieved on 2017-05-16] * the whole document * | 1-12 | |

**TECHNICAL FIELDS SEARCHED (IPC)**

G06N

The present search report has been drawn up for all claims

| Place of search | Date of completion of the search | Examiner |
|---|---|---|
| The Hague | 21 June 2021 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 859 613 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019046038 A